# FASCICULE DE BREVET EUROPEEN

(11) **EP 3 947 933 B1**
(45) Date de publication et mention de la délivrance du brevet: **07.12.2022**
(21) Numéro de dépôt: 20708545.7
(22) Date de dépôt: 10.02.2020
(51) Int. Cl.: F01P 11/16, B60K 1/00

(54) **PROCEDE DE DIAGNOSTIC D'UN SYSTEME DE REFROIDISSEMENT D'UN CIRCUIT ELECTRIQUE DE PROPULSION**
VERFAHREN ZUR DIAGNOSE EINES SYSTEMS ZUR KÜHLUNG EINER ELEKTRISCHEN ANTRIEBSSCHALTUNG
METHOD FOR DIAGNOSING A SYSTEM FOR COOLING AN ELECTRICAL PROPULSION CIRCUIT

(30) Priorité: 27.03.2019 FR 1903181
(43) Date de publication de la demande: 09.02.2022
(73) Titulaire: PSA Automobiles SA, 78300 Poissy (FR)
(72) Inventeur: MIQUEL, Claire, 95220 HERBLAY (FR); CHARDEL, Fabrice, 94550 CHEVILLY LARUE (FR)
(86) Numéro de dépôt international: PCT/FR2020/050229
(87) Numéro de publication internationale: WO 2020/193886

(56) Documents cités:
- US-A1- 2004 069 546
- US-A1- 2014 174 708
- US-A1- 2016 096 413
- US-A1- 2018 072 135

## Description

### DOMAINE TECHNIQUE DE L'INVENTION

La présente invention concerne un procédé de diagnostic d'une surchauffe d'un système de refroidissement d'un circuit électrique de propulsion dans un véhicule, le diagnostic élaboré servant de diagnostic de surveillance de la performance globale du système de refroidissement du circuit électrique dit alors circuit basse température.

La présente invention s'applique particulièrement au niveau du contrôle-commande des véhicules automobiles hybrides ou électriques.

### Art antérieur

Une ou des machines électriques sont utilisées pour assurer la propulsion d'un véhicule automobile en mode électrique et sont alimentées par une batterie haute tension via des onduleurs. Ces circuits électriques étant fortement sollicités, la température augmente par effet joule d'où la nécessité de mettre en place un système de refroidissement par fluide caloporteur adapté.

L'ensemble est piloté à partir d'un ou plusieurs calculateurs regroupés notamment dans une unité électronique de contrôle de l'ensemble, cette unité électronique pouvant communiquer avec d'autres unités électroniques de contrôle embarquées dans le véhicule automobile.

Le système de gestion thermique permet d'assurer le refroidissement de la ou des machines électriques et d'un ou des éléments électriques associées aux machines électriques réalisant l'électronique de puissance. (v. US 2014/174708)

L'état thermique de ces éléments a un rôle direct sur les performances et la disponibilité du circuit électrique pour la propulsion, la récupération électrique et la charge électrique du véhicule.

L'objectif est d'évacuer le flux thermique généré par les différents éléments présents sur le circuit électrique basse température.

Un véhicule automobile hybride ou électrique comprend au moins une machine électrique ou moteur électrique pour la propulsion du véhicule, la ou les machines électriques étant intégrées dans un ou des circuits électriques comprenant des éléments électriques comme un ou des onduleurs, une batterie et un dispositif de rechargement d'une batterie, notamment pour un train avant ou un train arrière.

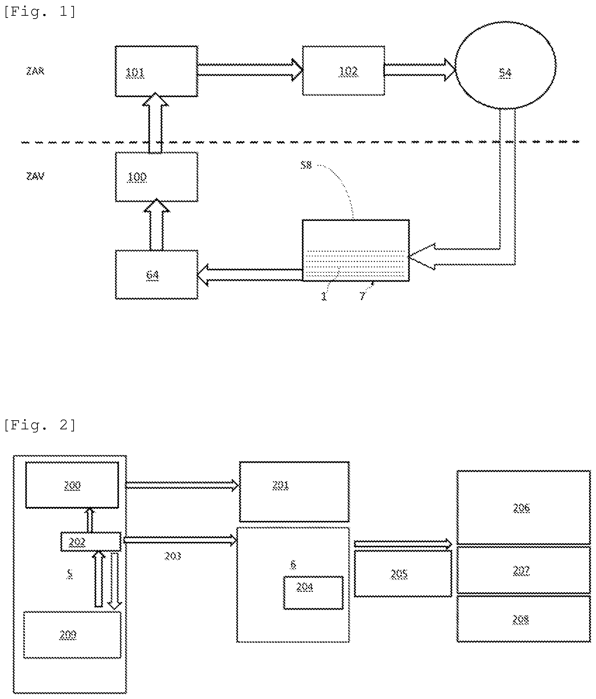

La figure 1 montre un exemple non limitatif d'un ensemble d'un circuit électrique de propulsion doté d'un système de refroidissement.

Cette figure 1 schématise le système de refroidissement pour un véhicule ayant au moins une machine électrique 54 motrice sur un train arrière du véhicule positionné dans une zone arrière ZAR du véhicule.

Le système de refroidissement comprend successivement un radiateur 58 positionné dans une zone avant ZAV du véhicule et pouvant faire partie d'un groupe moto-ventilateur 7 équipé d'un système de volets obturateurs 1 pilotés pour une admission plus ou moins grande d'air extérieur au véhicule vers le radiateur 58 basse température.

Une pompe de circulation 64 de fluide permet de faire circuler le liquide caloporteur du radiateur 58 vers un onduleur 100 en zone avant ZAV du véhicule, puis vers un convertisseur de courant 101, puis vers un onduleur 102 en zone arrière ZAR du véhicule, puis vers la machine électrique de traction 54 pouvant être située en zone arrière ZAR du véhicule, avant de revenir dans le radiateur 58.

Par convertisseur 101, il est entendu soit un dispositif de rechargement embarqué pour une batterie haute tension, couramment désigné par l'homme du métier sous l'acronyme OBC pour « On Board Charger » en anglais, soit un convertisseur de courant continu haute tension en courant continu basse tension utilisé pour la conversion d'une tension entre une batterie haute tension comme une batterie de traction et une batterie basse tension comme une batterie de servitude ou soit un dispositif de rechargement et un convertisseur groupés. La dénomination convertisseur peut aussi inclure une batterie.

La séparation entre la zone avant ZAV et la zone arrière ZAR du véhicule est schématisée par le trait en pointillés, le radiateur 58 étant dans la zone avant ZAV du véhicule.

Une unité électronique de contrôle peut commander le dispositif de propulsion électrique comprenant les équipements de puissance qui sont dans cet exemple l'onduleur 100 à l'avant du véhicule, le convertisseur de courant 101, l'onduleur 102 à l'arrière du véhicule, et la machine électrique de traction 54.

Une unité électronique de contrôle, associée ou non à l'unité électronique précédemment mentionnée, peut commander le système de refroidissement du circuit électrique de propulsion en contrôlant les équipements de commande de refroidissement qui dans cet exemple sont la pompe de circulation 64, le groupe moto-ventilateur 7 et le système de volets obturateurs 1. L'unité ou les unités électroniques de contrôle peuvent être, par exemple, embarquées dans l'un des équipements de puissance à refroidir, notamment le convertisseur de courant 101.

En variante, le groupe moto-ventilateur 7 et le système de volets obturateurs 1 peuvent être contrôlés par une unité électronique de contrôle différente, par exemple une unité de contrôle moteur, contrôlant, le cas échéant, un moteur thermique dans le cas d'un véhicule hybride et déterminant, entre autres, une répartition de couple moteur entre la ou les machines électriques et le moteur thermique.

Actuellement, pour le développement de véhicules automobiles hybrides, une nouvelle réglementation impose un diagnostic d'efficacité globale du système de refroidissement basse température précédemment décrit.

Par conséquent, le problème à la base de l'invention est, dans un véhicule automobile, pour un ensemble d'un circuit électrique comprenant au moins une machine électrique et un système de refroidissement à fluide caloporteur de mettre à disposition un diagnostic fonctionnel afin de répondre à cette exigence réglementaire concernant l'efficacité globale du système de refroidissement.

### Résumé de l'invention

A cet effet la présente invention concerne un procédé de diagnostic d'une surchauffe d'un système de refroidissement par fluide caloporteur dans un véhicule automobile d'un circuit électrique comprenant au moins une machine électrique de propulsion du véhicule et au moins un élément électrique associé à ladite au moins une machine électrique à refroidir, une température du fluide étant relevée, remarquable en ce que le procédé comporte une étape de détermination d'un premier seuil inférieur, égal à une température extérieure dans un environnement du véhicule, et d'un deuxième seuil égal au minimum entre, d'une part, un troisième seuil paramétrable et, d'autre part, une température la plus élevée des températures de ladite au moins une machine électrique et dudit au moins un élément électrique, une étape de comparaison de la température relevée du fluide avec les premier et deuxième seuils, et, quand la température relevée n'est pas comprise entre les premier et deuxième seuils, il est effectué une étape de diagnostic du système de refroidissement comme étant en surchauffe.

L'effet technique de la présente invention est de permettre de détecter rapidement, puis d'éviter le cas échéant par la mise en œuvre de mesures de protection, une surchauffe anormale de la température de fluide du système de refroidissement. L'invention cherche à résoudre des problématiques liées à la surchauffe de la température de fluide du circuit électrique rendant l'utilisation du mode hybride impossible pour le conducteur et nécessitant de basculer sur le mode thermique ou requérant l'arrêt d'un véhicule à propulsion électrique.

Il est proposé d'implémenter un diagnostic fonctionnel qui permet de valider la cohérence de l'information température de fluide en vérifiant son positionnement entre deux limites : un seuil minimal qui correspond à la température d'air extérieure et une borne maximale qui est le minimum entre un troisième seuil paramétrable et le maximum parmi toutes les températures des éléments électriques du circuit, machine électrique comprise.

Il est considéré le maximum des températures des éléments électriques afin de permettre d'écarter une température trop faible d'un élément électrique, si celui-ci n'est pas utilisé ou s'il est divergeant en ayant une valeur négative. Cela ne serait pas possible, par exemple, si on prenait une moyenne des températures des éléments électriques pour le calcul. Cependant, la définition d'un troisième seuil de température étant considéré comme limitatif pour la détermination du deuxième seuil, ce troisième seuil étant paramétrable, permet d'écarter une divergence par le haut de la plus haute température d'un élément électrique dans le circuit y compris la machine électrique.

Sans prendre un minimum entre ce troisième seuil et la plus haute température d'un élément, il y aurait un risque d'avoir une température d'un élément trop élevée qui pourrait masquer une surchauffe de température de fluide.

Avantageusement, le troisième seuil est calibré afin d'effectuer un bornage supérieur de la température la plus élevée des températures de ladite au moins une machine électrique et dudit au moins un élément électrique en étant inférieur ou égal à 100°C.

Avantageusement, il est établi des conditions préalables de mise en œuvre du diagnostic, ces conditions préalables étant une circulation de fluide diagnostiquée contrôlée comme étant régulière, un relevé de la température de fluide effectué par un capteur de température contrôlé comme opérationnel, une température d'air extérieur stable depuis une durée supérieure à un premier seuil de temps minimal prédéterminé et une température de fluide stable depuis une durée supérieure à un deuxième seuil de temps minimal prédéterminé.

Ces conditions préalables permettent de garantir une détection de diagnostic robuste. Lorsque toutes ces conditions d'activation du diagnostic sont réunies, la surveillance du diagnostic d'efficacité du système de refroidissement du circuit basse température, est alors enclenchée au bout d'une temporisation.

Avantageusement, l'étape de comparaison s'effectue après une temporisation d'une durée prédéterminée.

L'invention concerne aussi un procédé de protection d'un circuit électrique refroidi par un système de refroidissement par fluide caloporteur dans un véhicule automobile, remarquable en ce qu'il intègre un tel procédé de diagnostic et, quand il est effectué un diagnostic du système de refroidissement comme étant en surchauffe, la température relevée du fluide n'étant pas comprise entre les premier et deuxième seuils, il est effectué une augmentation d'un débit du fluide dans le système de refroidissement avec une émission d'une alerte à destination du conducteur du véhicule et une suspension de tout rechargement électrique du circuit comme un freinage récupératif d'énergie. L'intérêt technique du procédé de protection selon la présente invention est de s'assurer de l'efficacité globale du refroidissement du circuit électrique avant d'arriver dans une situation de vie où l'utilisation du mode hybride ou d'un mode purement électrique par le conducteur ne sera plus possible. Ceci permet de privilégier la disponibilité en mode hybride sur le véhicule et d'augmenter la durabilité des éléments électriques y compris la ou les machines électriques, en leur évitant des surchauffes répétées trop importantes. L'augmentation d'un débit du fluide dans le système de refroidissement est une première mesure de protection contre la surchauffe. Cette augmentation de débit peut être réglable en fonction du dépassement du deuxième seuil par la température du fluide et être plus important plus le deuxième seuil est dépassé.

De même, la suspension du freinage récupératif d'énergie permet de ne pas augmenter la dissipation de chaleur dans le circuit électrique. L'alerte permet aussi d'avertir le conducteur d'un risque de surchauffe. D'autres mesures de protection ou modes dégradés sont aussi possibles et les mesures peuvent être spécifiquement adaptées à la position de la température relevée plus haute que le deuxième seuil.

Avantageusement, quand l'augmentation du débit de fluide ou la suspension de tout rechargement électrique du circuit ne sont pas suffisantes pour ramener la température relevée du fluide comprise entre les premier et deuxième seuils, il est effectué, pour un véhicule hybride, un arrêt au moins partiel de ladite au moins une machine électrique et un redémarrage d'un moteur thermique pour une propulsion du véhicule hybride, ou, pour un véhicule électrique, à une émission d'une alerte urgente d'arrêt du véhicule automobile à destination du conducteur du véhicule automobile et/ou à un arrêt au moins partiel d'au moins une machine électrique du circuit quand plusieurs machines électriques sont présentes dans le circuit.

Ces caractéristiques optionnelles concernent des mesures de protection ou modes dégradés qui sont plus radicales qu'une augmentation de débit et ne sont mises en œuvre que quand l'augmentation de débit n'a pas permis de faire descendre la température du fluide.

L'invention concerne aussi un ensemble, dans un véhicule automobile, d'un circuit électrique et de son système de refroidissement par fluide caloporteur comportant au moins un organe de mesure ou d'estimation d'une température du fluide, le circuit électrique comprenant au moins une machine électrique de propulsion du véhicule et au moins un élément électrique associé à ladite au moins une machine électrique à refroidir, l'ensemble comprenant une unité électronique de contrôle en charge de son fonctionnement et étant protégé par un tel procédé de protection, remarquable en ce que l'unité électronique de contrôle comprend des moyens de réception de la température du fluide relevée, des moyens de mémorisation des premier, deuxième et troisième seuils, des moyens de comparaison de la température relevée avec les premier et deuxième seuils, des moyens d'établissement d'un diagnostic d'un système de refroidissement en surchauffe et, dans ce cas, des moyens d'augmentation du débit de fluide dans le système de refroidissement, des moyens d'émission d'une alerte visuelle ou sonore à destination du conducteur et des moyens de suspension de tout rechargement électrique du circuit comme un freinage récupératif d'énergie. Une partie de l'unité électronique de contrôle, concernant les moyens de diagnostic d'efficacité du système de refroidissement du circuit électrique peut être intégrée à une fonction embarquée dans un calculateur associé à un convertisseur de courant continu en courant continu ou à un dispositif de rechargement embarqué présent dans le circuit électrique de propulsion considéré.

Avantageusement, l'unité électronique de contrôle de l'ensemble comprend des moyens d'émission d'une demande d'arrêt au moins partiel de ladite au moins une machine électrique vers une unité électronique de contrôle principal d'un véhicule automobile hybride avec des moyens de remise en marche du moteur thermique du véhicule ou des moyens de demande urgente d'arrêt au moins partiel de ladite au moins une machine électrique pour un véhicule automobile électrique.

Par exemple, sans que cela soit limitatif, en cas de remontée d'un diagnostic de surchauffe, un des éléments électriques du circuit de propulsion logeant l'unité électronique de contrôle confirme alors le diagnostic et active des mesures de protection ou modes dégradés imposant alors une activation maximale de la pompe à fluide basse température, afin de refroidir au mieux les éléments du circuit électrique.

L'élément électrique logeant l'unité électronique de contrôle envoie également une alerte vers une unité électronique de contrôle principale, par exemple le contrôle moteur, afin de demander un redémarrage du moteur thermique pour un véhicule automobile, l'arrêt au moins partiel de la propulsion électrique, une suspension de freinage récupératif et enfin une alerte conducteur visuelle ou sonore.

Avantageusement, ledit au moins un élément électrique est sélectionné parmi les éléments suivants pris unitairement ou en combinaison : au moins un onduleur, au moins un dispositif de rechargement électrique embarqué dans le véhicule automobile, au moins un convertisseur de courant continu haute tension en courant continu, au moins une batterie, le système de refroidissement comprenant au moins une pompe et au moins un radiateur faisant partie ou non d'un groupe moto-ventilateur avec des volets d'aération pilotés, l'unité électronique de contrôle commandant des moyens d'actionnement des volets d'aération en une position d'ouverture maximale quand les moyens d'augmentation du débit de fluide sont activés.

L'invention concerne enfin un véhicule automobile électrique ou hybride, remarquable en ce qu'il comprend un tel ensemble d'un circuit électrique et de son système de refroidissement par fluide caloporteur.

### Brève description des figures

D'autres caractéristiques, buts et avantages de la présente invention apparaîtront à la lecture de la description détaillée qui va suivre et au regard des dessins annexés donnés à titre d'exemples non limitatifs et sur lesquels :
[Fig. 1] - la figure 1 est une représentation schématique d'un ensemble d'un circuit électrique de propulsion comprenant au moins une machine électrique et de son système de refroidissement par fluide caloporteur, le procédé de diagnostic selon la présente invention étant applicable à un tel ensemble.
[Fig. 2] - la figure 2 est une représentation schématique d'une architecture d'un ensemble d'un circuit électrique comportant au moins une machine électrique de propulsion et de son système de refroidissement par fluide caloporteur dans un véhicule automobile avec détail des étapes d'une forme de réalisation d'un procédé de protection du circuit électrique selon la présente invention,

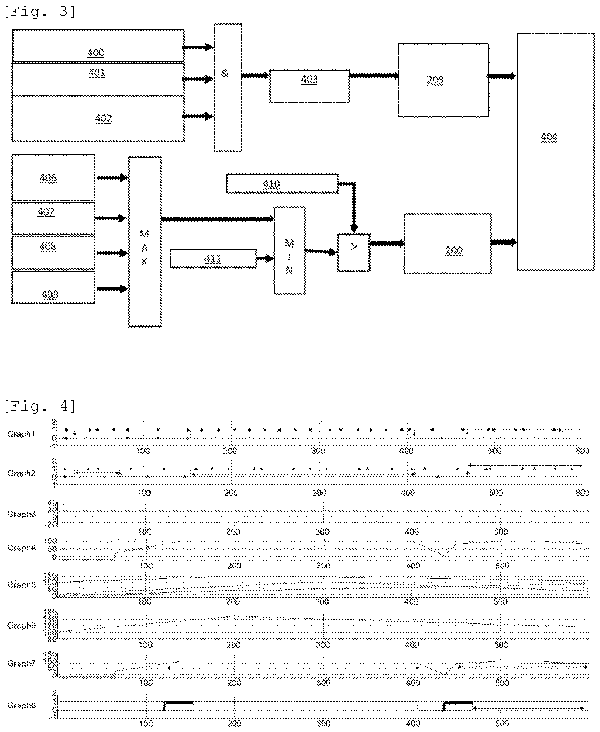

[Fig. 3] - la figure 3 est une représentation d'un logigramme d'une forme de réalisation selon la présente invention d'un procédé de protection d'un circuit électrique comportant au moins une machine électrique de propulsion dans un véhicule automobile, le circuit étant refroidi par un système de refroidissement par fluide caloporteur,
[Fig. 4] - la figure 4 montre huit graphiques de températures d'air extérieur, de fluide et d'éléments électriques du circuit de propulsion refroidi dans divers cas de figure de mise en œuvre du procédé selon la présente invention.

Il est à garder à l'esprit que les figures sont données à titre d'exemples et ne sont pas limitatives de l'invention. Elles constituent des représentations schématiques de principe destinées à faciliter la compréhension de l'invention et ne sont pas nécessairement à l'échelle des applications pratiques. En particulier, les dimensions des différents éléments illustrés ne sont pas représentatives de la réalité.

### Description détaillée de l'invention

Dans ce qui va suivre, il est fait référence à toutes les figures prises en combinaison. Quand il est fait référence à une ou des figures spécifiques, ces figures sont à prendre en combinaison avec les autres figures pour la reconnaissance des références numériques désignées.

En se référant principalement aux figures 1 à 3, la présente invention concerne un procédé de diagnostic d'une surchauffe d'un système de refroidissement par fluide caloporteur dans un véhicule automobile d'un circuit électrique comprenant au moins une machine électrique 54 de propulsion du véhicule et au moins un élément électrique 100 à 102 associé à ladite au moins une machine électrique 54 à refroidir.

Ledit au moins un élément électrique 100 à 102 peut être multiple ou individuel et être sélectionné parmi les éléments suivants pris unitairement ou en combinaison : au moins un onduleur 100, 102, au moins un dispositif de rechargement électrique embarqué dans le véhicule automobile, au moins une batterie, notamment une batterie haute tension, au moins un convertisseur 101 de courant continu haute tension en courant continu connectant par exemple une batterie haute tension équipant le véhicule automobile à une batterie basse tension équipant le circuit électrique de propulsion à refroidir.

Le circuit électrique de propulsion avec au moins une machine électrique 54 et son système de refroidissement forme un ensemble contrôlée par une unité électronique de contrôle 5. Un tel système de refroidissement est dit basse température en comparaison avec un système de refroidissement d'un moteur thermique dont la température du fluide caloporteur est plus élevée et qui est dit haute température.

Le système de refroidissement comprend au moins une pompe 64 et au moins un radiateur 58 faisant partie ou non d'un groupe moto-ventilateur 7 avec des volets 1 d'aération pilotés. Le système de refroidissement refroidit au moins la machine électrique 54 et au moins un élément électrique 100 à 102 du circuit dégageant de la chaleur.

Le système de refroidissement comprend, de manière usuelle, un capteur de température ou un organe d'estimation pour un relevé et un suivi de la température du fluide 410 caloporteur circulant en son intérieur.

Selon l'invention, le procédé comporte une étape de détermination d'un premier seuil inférieur égal à une température extérieure dans un environnement du véhicule. De plus, dans cette étape de détermination, il est fixé un deuxième seuil MIN égal au minimum entre, d'une part, un troisième seuil 411 paramétrable et, d'autre part, une température la plus élevée MAX des températures 406 à 409 de ladite au moins une machine électrique 54 et dudit au moins un élément électrique 100 à 102.

Il est ensuite procédé à une étape de comparaison référencée > de la température relevée du fluide 410 avec les premier et deuxième seuils MIN. Quand la température relevée 410 n'est pas comprise entre les premier et deuxième seuils MIN, il est effectué une étape de diagnostic 200 du système de refroidissement comme étant en surchauffe.

La température de fluide 410 est donc encadrée entre une température d'air extérieur et une borne maximale relative à la température la plus élevée parmi les éléments du circuit de propulsion, machine électrique 54 comprise, tant que cette température maximale se trouve en dessous d'une borne maximale représentée par le troisième seuil 411 prédéterminée.

Le troisième seuil 411 sert à limiter le deuxième seuil MIN vers le haut et à faire qu'il soit suffisamment bas pour pouvoir détecter une température de fluide 410 de surchauffe.

Cette température de fluide 410 de surchauffe pourrait ne pas être détectée comme étant au-dessus des premier et deuxième seuils MIN si la température d'un des éléments 100 à 102 ou de la machine électrique 54 était trop élevée, par exemple entre 150°C et 100°C, en donnant alors un deuxième seuil MIN trop élevé, qui empêcherait toute détection de température de surchauffe du fluide caloporteur.

Au contraire, s'il est réalisé un bornage de la valeur de température la plus haute parmi le ou les éléments électriques 100 à 102 et la ou les machines électriques 54 du circuit électrique de propulsion pour l'obtention du deuxième seuil MIN, par exemple par un troisième seuil 411 vers les 80°C, la détection d'une température de fluide 410 en surchauffe à 100°C est donc garantie.

Le troisième seuil 411 peut donc être calibré afin d'effectuer un bornage supérieur de la température la plus élevée MAX des températures 406 à 409 de la ou des machines électriques 54 et de l'élément ou des éléments électriques 100 à 102 en étant inférieur ou égal à 100°C.

Le procédé de diagnostic d'une surchauffe d'un système de refroidissement par fluide caloporteur dans un véhicule automobile d'un circuit électrique cesse à partir du moment où l'on observe une température de fluide 410 qui devient inférieure au deuxième seuil MIN, que des conditions d'activation ne sont plus réunies, ou lors d'une remontée de défaut électrique sur la pompe 64 à fluide ou sur un capteur de température de fluide 410.

Pour que le diagnostic soit fiable, il peut être posé des conditions préalables 400 à 402 de mise en œuvre du procédé de diagnostic selon la présente invention.

Ces conditions préalables 400 à 402 peuvent comprendre une circulation de fluide diagnostiquée contrôlée comme étant régulière 400 et un relevé de la température de fluide 410 effectué par un capteur de température contrôlé comme opérationnel 401.

Une autre condition préalable peut concerner une température d'air extérieur stable 402 depuis une durée supérieure à un premier seuil de temps minimal prédéterminé.

Enfin, une dernière condition préalable peut concerner une température de fluide 410 stable 402 depuis une durée supérieure à un deuxième seuil de temps minimal prédéterminé.

L'étape de comparaison du procédé de diagnostic peut s'effectuer après une temporisation 403 d'une durée prédéterminée.

Il est en effet nécessaire d'avoir une température d'air extérieur et une température de fluide 410 caloporteur qui soient suffisamment stables 402 lors de l'activation du diagnostic afin d'éviter toutes fausses détections.

Une fausse détection peut se produire par exemple lors d'un passage dans un tunnel ou une sortie de garage, sans que cela soit limitatif.

Par exemple, un véhicule automobile, garé à l'extérieur par temps froid avec une température d'air extérieur à -5°C présente à son démarrage une température d'air extérieur égale à la température du fluide 410 caloporteur et aussi égale à la température la plus chaude d'un des éléments du circuit de propulsion électrique, ces températures étant égales à -5°C. Quand le véhicule automobile roule et rentre dans un tunnel ou dans un parking sous-terrain, la température d'air extérieur peut passer de -5°C à 10°C/15°C instantanément, alors que les températures de fluide caloporteur et d'un des éléments du circuit la plus haute n'ont augmenté que seulement lentement compte tenu de l'inertie matière des éléments. Particulièrement, si la distance parcourue est faible, il y a donc un risque d'avoir la température d'air extérieur alors provisoirement en vigueur supérieure à une température de fluide 410 elle-même supérieure à la température la plus haute d'un des éléments du circuit électrique de propulsion. Ceci donnera un faux diagnostic et est à éviter.

Il est donc nécessaire de réaliser ce diagnostic uniquement lorsque la température d'air extérieur est stable 402, pour avoir une détection fiable de surchauffe au niveau du système de refroidissement du circuit électrique de propulsion. L'invention concerne aussi un procédé de protection d'un circuit électrique refroidi par un système de refroidissement par fluide caloporteur dans un véhicule automobile. Le procédé de protection intègre un procédé de diagnostic tel que précédemment décrit.

Quand il est effectué un diagnostic du système de refroidissement comme étant en surchauffe, la température relevée du fluide 410 n'étant pas comprise entre les premier et deuxième seuils MIN, il est effectué des mesures spécifiques pour abaisser la température du fluide 410 caloporteur.

Il est procédé à une augmentation 201 d'un débit du fluide dans le système de refroidissement, cette augmentation 201 pouvant être régulée et de différents niveaux selon le dépassement par la température du fluide 410 du deuxième seuil MIN. Parallèlement, il est procédé à une émission d'une alerte 208 à destination du conducteur du véhicule et de toute mesure préventive contre un dégagement supplémentaire de chaleur dans le circuit électrique de propulsion.

Des possibles autres mesures de protection sont une suspension de tout rechargement électrique du circuit, un tel rechargement dégageant de la chaleur ou un freinage récupératif 207 d'énergie par envoi d'une information vers le correcteur électronique de trajectoire indiquant une suspension de freinages récupératifs. Ces mesures sont les mesures d'urgence prises immédiatement détection d'une surchauffe mais peuvent se révéler insuffisantes.

Dans ce cas, quand l'augmentation 201 du débit de fluide ou la suspension de tout rechargement électrique du circuit ne sont pas suffisantes pour ramener la température relevée du fluide 410 comprise entre les premier et deuxième seuils MIN, il peut être effectué, pour un véhicule hybride, un arrêt au moins partiel 206 de ladite au moins une machine électrique 54 et un redémarrage d'un moteur thermique pour une propulsion du véhicule hybride.

Pour un véhicule électrique, il peut être effectué une émission d'une alerte 208 urgente d'arrêt du véhicule automobile à destination du conducteur du véhicule automobile et/ou un arrêt au moins partiel 206 d'au moins une machine électrique 54 du circuit quand plusieurs machines électriques 54 sont présentes dans le circuit.

Dans le cas d'un véhicule automobile électrique, la machine électrique 54 pour un circuit électrique de propulsion ne comportant qu'une machine électrique 54 ou toutes les machines électrique du circuit électrique de propulsion dans le cas d'un circuit comportant plusieurs machines électriques 54 ne peuvent pas être arrêtées entièrement.

Il est possible de continuer la propulsion du véhicule hybride ou électrique en pilotant la ou les machines électriques 54 pour qu'elles dégagent moins de chaleur.

En se référant aux figures 1 et 2, dans une unité électronique de contrôle 5 en charge du fonctionnement du système de refroidissement et du circuit électrique de propulsion, conformément au procédé de protection du circuit électrique refroidi par le système de refroidissement par fluide caloporteur, il peut être procédé à l'activation d'une surveillance 209 de la température du système de refroidissement.

Il est procédé à une étape de comparaison 209 de la température relevée du fluide 410, communiquée à l'unité électronique de contrôle 5 avec les premier et deuxième seuils MIN mémorisés dans cette unité électronique, le premier seuil provenant d'une mesure de la température extérieur dans l'environnement du véhicule effectuée par un capteur de température extérieure. Il est ensuite procédé à l'étape de diagnostic 200 d'une surchauffe du système de refroidissement de l'ensemble circuit électrique et système de refroidissement.

La première mesure préventive ou premier mode dégradé de fonctionnement contre une surchauffe du fluide du système de refroidissement est une activation 201 de la pompe 64 du système de refroidissement à une vitesse plus grande, le cas échéant à sa vitesse maximale.

Parallèlement, il peut être alors procédé à l'envoi d'une alerte 203 vers une unité électronique de contrôle moteur 6 comportant un calculateur 204 et des moyens d'émission de demandes de mesures de protection auxiliaires vers le circuit électrique de propulsion et vers des organes 205 collaborant avec le circuit électrique.

Les mesures de protection auxiliaires peuvent être un arrêt au moins partiel 206 de la propulsion électrique. Quand plusieurs machines électriques 54 sont présentes, par exemple une machine électrique 54 arrière et une machine électrique avant, ces machines peuvent être ralenties dans leur fonctionnement ou même arrêtées pour l'une d'entre elles.

Une autre mesure préventive est une suspension d'un freinage récupératif 207 envoyé vers le dispositif de correction électronique de trajectoire.

Enfin, une dernière mesure préventive est une alerte 208 envoyée en direction du conducteur du véhicule automobile, avantageusement une alerte visuelle et/ou sonore.

A la figure 3 en se référant aussi à la figure 1, il est montré un logigramme du procédé de protection d'un circuit électrique refroidi par un système de refroidissement par fluide caloporteur dans un véhicule automobile.

Les conditions préalables 400 à 402 de mise en œuvre du procédé de diagnostic puis du procédé de prévention peuvent être une absence de défaut électrique 400 sur la pompe 64 à fluide, ce qui procure une circulation de fluide dans le circuit contrôlée comme étant régulière 400, une absence de défaut sur le capteur de température 401 de fluide quand présent dans le cas d'une mesure effective de la température de fluide 410 et non d'une estimation, une validation de stabilité 402 des informations sur la température d'air extérieur et la température de fluide 410 prises respectivement sur une durée supérieure à un premier seuil de temps minimal prédéterminé et sur une durée supérieure à un deuxième seuil de temps minimal prédéterminé.

Ces conditions préalables 400 à 402 respectées et une durée de temporisation 403 ayant été aussi respectée, il peut être procédé à une activation 209 de la surveillance d'une surchauffe du système de refroidissement, comme il avait été montré à la figure 2.

Les données de température introduites pour effectuer la comparaison de la température de fluide 410 en vigueur avec les premier et deuxième seuils MIN peuvent être une température 406 de la ou des machines électriques 54, une température 407 d'un onduleur avant 100 ou une température 408 d'un onduleur arrière 102 quand ces deux onduleurs 100, 102 sont présents, ce qui n'est pas obligatoire et une température 409 du convertisseur 101 de courant continu en courant continu avantageusement couplé avec un dispositif de rechargement d'une batterie.

La valeur maximale MAX de ces températures 406 à 409 est prise et est comparée au troisième seuil 411 calibrable pour obtenir un minimum MIN entre la valeur maximale MAX et le troisième seuil 411 calibrable.

Si la température du fluide 410 en vigueur est supérieur à ce minimum MIN, il est effectué une détection de surchauffe 200 de l'ensemble circuit électrique et système de refroidissement. Si l'activation 209 de la surveillance d'une surchauffe du système de refroidissement et la détection de surchauffe 200 de l'ensemble circuit électrique et système de refroidissement sont effectives, il est procédé à l'activation des mesures de protection contre une surchauffe, ce qui est référencé 404 à la figure 3, des mesures de protection ayant été déjà détaillées en regard de la figure 2.

En se référant à toutes les figures, l'invention concerne aussi un ensemble, dans un véhicule automobile, d'un circuit électrique et de son système de refroidissement par fluide caloporteur comportant au moins un organe de mesure ou d'estimation d'une température du fluide 410, avantageusement un capteur de température.

Le circuit électrique comprend au moins une machine électrique 54 de propulsion du véhicule et au moins un élément électrique 100 à 102 associé à ladite au moins une machine électrique 54 à refroidir, une liste des éléments électriques potentiels ayant été précédemment donnée.

L'ensemble comprend une unité électronique de contrôle 5 en charge de son fonctionnement et est protégé par un procédé de protection tel que précédemment décrit.

Pour ce faire, l'unité électronique de contrôle 5 comprend des moyens de réception de la température du fluide 410 relevée, avantageusement par un capteur de température de fluide 410, des moyens de mémorisation des premier, deuxième et troisième seuils MIN, 411, le premier seuil ayant été estimée ou mesurée par un capteur de température extérieure.

L'unité électronique de contrôle 5 comprend aussi des moyens de comparaison de la température relevée de fluide 410 avec les premier et deuxième seuils MIN et des moyens d'établissement d'un diagnostic d'un système de refroidissement en surchauffe. Dans ce cas, l'unité électronique de contrôle 5 active des moyens d'augmentation 201 du débit de fluide dans le système de refroidissement, des moyens d'émission d'une alerte 208 visuelle ou sonore à destination du conducteur et des moyens de suspension de tout rechargement électrique du circuit comme un freinage récupératif 207 d'énergie, en tant que mesures de protection de base.

L'unité électronique de contrôle 5 de l'ensemble comprend des moyens d'émission d'une demande d'arrêt au moins partiel 206 de ladite au moins une machine électrique 54 vers une unité électronique de contrôle principal 6, aussi dénommée unité de contrôle moteur, d'un véhicule automobile hybride avec des moyens de remise en marche du moteur thermique du véhicule ou des moyens de demande urgente d'arrêt au moins partiel 206 de ladite au moins une machine électrique 54 pour un véhicule automobile électrique, ceci vers l'unité électronique de contrôle principal 6, aussi dénommée unité de contrôle moteur. L'unité électronique de contrôle 5 de l'ensemble peut commander des moyens d'actionnement des volets 1 d'aération en une position d'ouverture maximale quand les moyens d'augmentation 201 du débit de fluide sont activés.

La présente invention se destine aussi bien à un véhicule automobile électrique qu'à un véhicule automobile hybride.

La figure 4, en se référant aussi à la figure 1, montre différentes courbes obtenues lors de la mise en œuvre du procédé selon la présente invention.

Dans le premier graphique Graph 1, il est montré l'évolution des domaines de validité concernant les températures d'air extérieur pour la courbe avec des rectangles et de fluide pour la courbe avec des points, ces courbes se confondant temporairement.

Les domaines de validité sont calculés à partir de l'évolution des températures d'air extérieur pour la courbe du troisième graphique Graph 3 et pour l'évolution de la température de fluide 410 pour le quatrième graphique Graph 4.

Les domaines de validité permettent d'identifier les zones où des changements de températures brusques s'opèrent, afin d'éviter toute fausse détection au niveau du diagnostic quand ces courbes sont à 1, donc dans une zone où la température de fluide 410 et la température d'air extérieur sont stables 402 ou quand ces courbes sont à zéro, donc dans une zone où on détecte une instabilité en termes de température.

Sur le deuxième graphique Graph 2, aucun défaut électrique n'est relevé ni sur la pompe 64 à fluide basse température ni sur le capteur de température de fluide 410 illustré par la courbe avec des points. La courbe avec des triangles du deuxième graphique Graph 2 représente l'activation de la surveillance du diagnostic. Toutes les conditions sont réunies pour assurer une détection correcte dans les zones balisées par les flèches.

Au cinquième graphique Graph 5, sont tracées les évolutions des températures des différents éléments 100 à 102, machine électrique 54 comprise, présents sur l'ensemble circuit et système de refroidissement.

Le sixième graphique Graph 6 représente le maximum des températures des éléments électriques 100 à 102, 54 du circuit et leur montée progressive, soit le maximum de la température de la machine électrique 54 arrière, des températures des onduleurs 100, 102 avant et arrière et de la température du convertisseur 101 comprenant le cas échéant un dispositif de rechargement embarqué.

Le septième graphique Graph 7 illustre le recalage qui est effectué entre le maximum des températures éléments du circuit électrique et le troisième seuil 411 paramétrable, avantageusement à 80°C. Un minimum entre le maximum des températures des éléments et le troisième seuil 411 paramétrable est effectué.

Le troisième seuil 411, à ce graphique Graph 7, est constant à 80°C en étant tout d'abord supérieur au maximum des températures, puis en étant dépassé par le maximum des températures dans la zone indiquée par la première flèche à double pointes la plus à gauche, le maximum des températures repassant en dessous du troisième seuil 411 à droite de la pointe droite de la première flèche et revenant au-dessus du troisième seuil 411 dans une zone balisée par une deuxième flèche à double pointes la plus à droite. Le minimum du troisième seuil 411 et du maximum des températures MAX des éléments électriques 100 à 102, machine électrique 54 comprise, donne le deuxième seuil MIN.

Au huitième graphe Graph 8, il est identifié par des traits gras toutes les zones où l'on observe une température de fluide 410 supérieure au deuxième seuil MIN, quelles que soient les conditions initiales d'activation du diagnostic.

La courbe non en gras identifie le déclenchement du diagnostic où l'on observe une température de fluide 410 supérieure au deuxième seuil MIN et lorsque les conditions d'activation du diagnostic sont correctement remplies en se référant au deuxième graphique Graph 2. Suite au début du diagnostic, il est activé un ou des mesures de protection ou modes dégradés.

De tels procédés de diagnostic fonctionnel et de protection peuvent être embarquées dans un logiciel d'une unité électronique de contrôle 5 embarqué dans un des éléments électriques du circuit électrique de propulsion, avantageusement le convertisseur 101 de courant continu en courant continu, ou dans un dispositif de rechargement du circuit.

Il est ainsi assuré une meilleure protection contre la surchauffe des électriques éléments tels que les onduleurs 100, 102 avant et arrière, la machine électrique 54 arrière, un convertisseur 101 et le dispositif de rechargement embarqué. L'invention n'est nullement limitée aux modes de réalisation décrits et illustrés qui n'ont été donnés qu'à titre d'exemples.

## Revendications

1. Procédé de diagnostic d'une surchauffe d'un système de refroidissement par fluide caloporteur dans un véhicule automobile d'un circuit électrique comprenant au moins une machine électrique (54) de propulsion du véhicule et au moins un élément électrique (100 à 102) associé à ladite au moins une machine électrique (54) à refroidir, une température du fluide (410) étant relevée, **caractérisé en ce que** le procédé comporte une étape de détermination d'un premier seuil inférieur, égal à une température extérieure dans un environnement du véhicule, et d'un deuxième seuil (MIN) égal au minimum entre, d'une part, un troisième seuil (411) paramétrable et, d'autre part, une température la plus élevée (MAX) des températures (406 à 409) de ladite au moins une machine électrique (54) et dudit au moins un élément électrique (100 à 102), une étape de comparaison de la température relevée du fluide (410) avec les premier et deuxième seuils (MIN), et, quand la température relevée (410) n'est pas comprise entre les premier et deuxième seuils (MIN), il est effectué une étape de diagnostic (200) du système de refroidissement comme étant en surchauffe.

2. Procédé selon la revendication précédente, dans lequel le troisième seuil (411) est calibré afin d'effectuer un bornage supérieur de la température la plus élevée (MAX) des températures (406 à 409) de ladite au moins une machine électrique (54) et dudit au moins un élément électrique (100 à 102) en étant inférieur ou égal à 100°C.

3. Procédé selon l'une quelconque des deux revendications précédentes, dans lequel il est établi des conditions préalables (400 à 402) de mise en œuvre du diagnostic, ces conditions préalables (400 à 402) étant une circulation de fluide diagnostiquée contrôlée comme étant régulière (400), un relevé de la température de fluide (410) effectué par un capteur de température contrôlé comme opérationnel (401), une température d'air extérieur stable (402) depuis une durée supérieure à un premier seuil de temps minimal prédéterminé et une température de fluide (410) stable (402) depuis une durée supérieure à un deuxième seuil de temps minimal prédéterminé.

4. Procédé selon la revendication précédente, dans lequel l'étape de comparaison s'effectue après une temporisation (403) d'une durée prédéterminée.

5. Procédé de protection d'un circuit électrique refroidi par un système de refroidissement par fluide caloporteur dans un véhicule automobile, **caractérisé en ce qu'**il intègre un procédé de diagnostic selon l'une quelconque des revendications précédentes et, quand il est effectué un diagnostic du système de refroidissement comme étant en surchauffe, la température relevée du fluide (410) n'étant pas comprise entre les premier et deuxième seuils (MIN), il est effectué une augmentation (201) d'un débit du fluide dans le système de refroidissement avec une émission d'une alerte (208) à destination du conducteur du véhicule et une suspension de tout rechargement électrique du circuit comme un freinage récupératif (207) d'énergie.

6. Procédé de protection selon la revendication précédente, dans lequel, quand l'augmentation (201) du débit de fluide ou la suspension de tout rechargement électrique du circuit (207) ne sont pas suffisantes pour ramener la température relevée du fluide (410) comprise entre les premier et deuxième seuils (MIN), il est effectué, pour un véhicule hybride, un arrêt au moins partiel (206) de ladite au moins une machine électrique (54) et un redémarrage d'un moteur thermique pour une propulsion du véhicule hybride, ou, pour un véhicule électrique, à une émission d'une alerte (208) urgente d'arrêt du véhicule automobile à destination du conducteur du véhicule automobile et/ou à un arrêt au moins partiel (206) d'au moins une machine électrique (54) du circuit quand plusieurs machines électriques (54) sont présentes dans le circuit.

7. Ensemble, dans un véhicule automobile, d'un circuit électrique et de son système de refroidissement par fluide caloporteur comportant au moins un organe de mesure ou d'estimation d'une température du fluide (410), le circuit électrique comprenant au moins une machine électrique (54) de propulsion du véhicule et au moins un élément électrique (100 à 102) associé à ladite au moins une machine électrique (54) à refroidir, l'ensemble comprenant une unité électronique de contrôle (5) en charge de son fonctionnement et étant protégé par un procédé selon l'une quelconque des deux revendications précédentes, **caractérisé en ce que** l'unité électronique de contrôle (5) comprend des moyens de réception de la température du fluide (410) relevée, des moyens de mémorisation des premier, deuxième et troisième seuils (MIN, 411), des moyens de comparaison de la température relevée avec les premier et deuxième seuils (MIN), des moyens d'établissement d'un diagnostic d'un système de refroidissement en surchauffe et, dans ce cas, des moyens d'augmentation (201) du débit de fluide dans le système de refroidissement, des moyens d'émission d'une alerte (208) visuelle ou sonore à destination du conducteur et des moyens de suspension de tout rechargement électrique du circuit comme un freinage récupératif (207) d'énergie.

8. Ensemble selon la revendication précédente, dans lequel l'unité électronique de contrôle (5) de l'ensemble comprend des moyens d'émission d'une demande d'arrêt au moins partiel (206) de ladite au moins une machine électrique (54) vers une unité électronique de contrôle principal (6) d'un véhicule automobile hybride avec des moyens de remise en marche du moteur thermique du véhicule ou des moyens de demande urgente d'arrêt au moins partiel (206) de ladite au moins une machine électrique (54) pour un véhicule automobile électrique.

9. Ensemble selon l'une quelconque des deux revendications précédentes, dans lequel ledit au moins un élément électrique (100 à 102) est sélectionné parmi les éléments suivants pris unitairement ou en combinaison : au moins un onduleur (100, 102), au moins un dispositif de rechargement électrique embarqué dans le véhicule automobile, au moins un convertisseur (101) de courant continu haute tension en courant continu, au moins une batterie, le système de refroidissement comprenant au moins une pompe (64) et au moins un radiateur (58) faisant partie ou non d'un groupe moto-ventilateur (7) avec des volets (1) d'aération pilotés, l'unité électronique de contrôle (5) commandant des moyens d'actionnement des volets (1) d'aération en une position d'ouverture maximale quand les moyens d'augmentation (201) du débit de fluide sont activés.

10. Véhicule automobile électrique ou hybride, **caractérisé en ce qu'**il comprend un ensemble d'un circuit électrique et de son système de refroidissement par fluide caloporteur selon l'une quelconque des revendications 7 à 9.

## Patentansprüche

1. Modus zur Diagnose einer Überhitzung eines Flüssigkeitskühlsystems Kühlmittel in einem Kraftfahrzeug eines elektrischen Kreislaufs, umfassend mindestens eine elektrische Maschine (54) zum Antreiben des Fahrzeugs und mindestens ein elektrisches Element (100 bis 102), das der mindestens einen zu kühlenden elektrischen Maschine (54) zugeordnet ist, a Temperatur des Fluids (410) erhöht wird, **dadurch gekennzeichnet, dass** das Verfahren einen Schritt des Bestimmens eines ersten unteren Schwellenwerts, der gleich einer Außentemperatur in einer Umgebung des Fahrzeugs ist, und eines zweiten Schwellenwerts (MIN), der gleich dem Minimum zwischen ist, umfasst. einerseits eine dritte konfigurierbare Schwelle (411) und andererseits eine höchste Temperatur (MAX) der Temperaturen (406 bis 409) der mindestens einen Elektromaschine (54) und der mindestens einen Elektromaschine Element (100 bis 102), einen Schritt zum Vergleichen der abgelesenen Temperatur des Fluids (410) mit dem ersten und dem zweiten Schwellenwert (MIN), und wenn die abgelesene Temperatur (410) nicht zwischen dem ersten und dem zweiten Schwellenwert (MIN) liegt, wird ein diagnostischer Schritt durchgeführt (200) des Kühlsystems als überhitzt.

2. Verfahren nach dem vorhergehenden Anspruch, bei dem die dritte Schwelle (411) kalibriert wird, um eine obere Begrenzung der höchsten Temperatur (MAX) der Temperaturen (406 bis 409) der mindestens einen elektrischen Maschine (54) durchzuführen. und das mindestens eine elektrische Element (100 bis 102) kleiner oder gleich 100°C ist.

3. Verfahren nach einem der beiden vorhergehenden Ansprüche, bei dem Vorbedingungen (400 bis 402) zur Durchführung der Diagnose erstellt werden, wobei diese Vorbedingungen (400 bis 402) eine als regelmäßig diagnostizierte Flüssigkeitszirkulation (400), ein Ablesen der Fluidtemperatur (410), die von einem als betriebsbereit gesteuerten Temperatursensor (401) gemessen wird, eine stabile Außenlufttemperatur (402) für eine Dauer größer als ein erster vorbestimmter minimaler Zeitschwellenwert und eine Fluidtemperatur (410) stabil (402) für eine Dauer größer als ein zweiter vorbestimmter minimaler Zeitschwellenwert.

4. Verfahren nach dem vorhergehenden Anspruch, bei dem der Vergleichsschritt nach einer Verzögerung (403) einer vorbestimmten Dauer ausgeführt wird.

5. Verfahren zum Schutz eines durch ein Flüssigkeitskühlsystem gekühlten elektrischen Schaltkreises Kühlmittel in einem Kraftfahrzeug, **dadurch gekennzeichnet, dass** es ein Diagnoseverfahren nach einem der vorhergehenden Ansprüche umfasst und dass, wenn eine Diagnose des Kühlsystems als überhitzt durchgeführt wird, die erfasste Temperatur des Fluids (410) nicht dazwischen liegt die ersten und zweiten Schwellenwerte (MIN), eine Erhöhung (201) einer Strömungsrate des Fluids in dem Kühlsystem mit einer Ausgabe eines Alarms (208), der für den Fahrer des Fahrzeugs bestimmt ist, und einer Aussetzung aller Elektrik durchgeführt wird Wiederaufladen des Stromkreises wie regeneratives Bremsen (207) von Energie.

6. Schutzverfahren nach dem vorhergehenden Anspruch, bei dem, wenn die Erhöhung (201) des Fluidstroms oder die Unterbrechung jeglicher elektrischer Wiederaufladung des Kreislaufs (207) nicht ausreichen, um die abgelesene Temperatur des Fluids (410) dazwischen zu bringen die ersten und zweiten Schwellenwerte (MIN), es wird für ein Hybridfahrzeug eine zumindest teilweise Abschaltung (206) der zumindest einen Elektromaschine (54) und ein Neustart einer Wärmekraftmaschine zum Antrieb des Hybridfahrzeugs durchgeführt. oder bei einem Elektrofahrzeug zu einer Abgabe eines dringenden Kraftfahrzeughaltealarms (208), der für den Fahrer des Kraftfahrzeugs bestimmt ist, und/oder zu einem zumindest teilweisen Halt (206) mindestens einer elektrischen Maschine (54) von des Stromkreises, wenn mehrere elektrische Maschinen (54) im Stromkreis vorhanden sind.

7. Montage eines elektrischen Schaltkreises und seines Flüssigkeitskühlsystems in einem Kraftfahrzeug Kühlmittel, das mindestens eine Vorrichtung zum Messen oder Schätzen einer Temperatur des Fluids (410) umfasst, wobei der elektrische Kreis mindestens eine elektrische Maschine (54) zum Antreiben des Fahrzeugs und mindestens ein elektrisches Element (100 bis 102) umfasst, das diesem zugeordnet ist mindestens eine zu kühlende elektrische Maschine (54), wobei die Anordnung eine elektronische Steuereinheit (5) umfasst, die für ihren Betrieb zuständig ist und durch ein Verfahren nach einem der beiden vorhergehenden Ansprüche geschützt ist, **dadurch gekennzeichnet, dass** die elektronische Steuereinheit (5) Mittel zum Empfangen der abgelesenen Temperatur des Fluids (410), Mittel zum Speichern des ersten, zweiten und dritten Schwellenwerts (MIN, 411), Mittel zum Vergleichen der abgelesenen Temperatur mit dem ersten und zweiten Schwellenwert (MIN), Mittel zum Erstellen einer Diagnose eines überhitzten Kühlsystems und in diesem Fall von Mitteln zum Erhöhen (201) der Fluiddurchflussrate im Kühlsystem, Mittel zum Übertragen einer sichtbaren oder hörbaren Warnung (208) an den Fahrer und Mittel zum Unterbrechen jeglichen elektrischen Wiederaufladens des Stromkreises, wie zum Beispiel regeneratives Bremsen (207) von Energie.

8. Baugruppe nach dem vorhergehenden Anspruch, bei der die elektronische Steuereinheit (5) der Baugruppe Mittel zum Übertragen einer Anforderung zum zumindest teilweisen Anhalten (206) der mindestens einen elektrischen Maschine (54) an eine elektronische Hauptsteuereinheit umfasst (6) eines Hybridkraftfahrzeugs mit Mitteln zum Neustarten der Wärmekraftmaschine des Fahrzeugs oder Mitteln zum dringenden Anfordern einer mindestens teilweisen Abschaltung (206) der mindestens einen elektrischen Maschine (54) für ein elektrisches Kraftfahrzeug.

9. Anordnung nach einem der beiden vorhergehenden Ansprüche, bei der das mindestens eine elektrische Element (100 bis 102) aus den folgenden Elementen einzeln oder in Kombination ausgewählt ist: mindestens ein Wechselrichter (100, 102), mindestens einer elektrische Ladestation an Bord des Kraftfahrzeugs, mindestens einen Umrichter (101) von Hochspannungsgleichstrom auf Gleichstrom, mindestens eine Batterie, das Kühlsystem umfasst mindestens eine Pumpe (64) und mindestens einen Kühler (58) unabhängig davon, ob sie Teil einer motorisierten Lüftereinheit (7) mit gesteuerten Lüftungsklappen (1) sind oder nicht, wobei die elektronische Steuereinheit (5) Mittel zum Betätigen der Lüftungsklappen (1) in eine maximal geöffnete Position steuert, wenn die Mittel zur Erhöhung des Fluidstroms (201) aktiviert sind.

10. Elektro oder Hybridkraftfahrzeug, **dadurch gekennzeichnet, dass** es eine Einheit aus einem elektrischen Kreislauf und seinem Flüssigkeitskühlsystem umfasst Kühlmittel nach einem der Ansprüche 7 bis 9.

## Claims

1. Mode for diagnosing overheating of a fluid cooling system coolant in a motor vehicle of an electric circuit comprising at least one electric machine (54) for propelling the vehicle and at least one electric element (100 to 102) associated with the said at least one electric machine (54) to be cooled, a temperature of the fluid (410) being raised, **characterized in that** the method comprises a step of determining a first lower threshold, equal to an outside temperature in an environment of the vehicle, and a second threshold (MIN) equal to the minimum between , on the one hand, a third configurable threshold (411) and, on the other hand, a highest temperature (MAX) of the temperatures (406 to 409) of said at least one electrical machine (54) and of said at least one electrical element (100 to 102), a step of comparing the read temperature of the fluid (410) with the first and second thresholds (MIN), and, when the read temperature (410) is not between the first and second thresholds (MIN), a diagnostic step is performed tic (200) of the cooling system as overheated.

2. Method according to the preceding claim, in which the third threshold (411) is calibrated in order to perform an upper bounding of the highest temperature (MAX) of the temperatures (406 to 409) of the said at least one electrical machine (54) and said at least one electrical element (100 to 102) being less than or equal to 100°C.

3. Method according to any one of the two preceding claims, in which preconditions (400 to 402) for carrying out the diagnosis are established, these preconditions (400 to 402) being a fluid circulation diagnosed as being regular (400), a reading of the fluid temperature (410) taken by a temperature sensor controlled as operational (401), a stable outside air temperature (402) for a duration greater than a first predetermined minimum time threshold and a fluid temperature (410) stable (402) for a duration greater than a second predetermined minimum time threshold.

4. Method according to the preceding claim, in which the step of comparing is carried out after a delay (403) of a predetermined duration.

5. Method for protecting an electrical circuit cooled by a fluid cooling system coolant in a motor vehicle, **characterized in that** it incorporates a diagnostic method according to any one of the preceding claims and, when a diagnosis of the cooling system as being overheated is carried out, the detected temperature of the fluid (410) not being between the first and second thresholds (MIN), an increase (201) of a flow rate of the fluid in the cooling system is carried out with an emission of an alert (208) intended for the driver of the vehicle and a suspension of all electrical recharging of the circuit such as regenerative braking (207) of energy.

6. Protection method according to the preceding claim, in which, when the increase (201) in the flow of fluid or the suspension of any electrical recharging of the circuit (207) are not sufficient to bring the read temperature of the fluid (410) between the first and second thresholds (MIN), it is performed, for a hybrid vehicle, an at least partial shutdown (206) of said at least one electric machine (54) and a restart of a heat engine for propulsion of the hybrid vehicle, or, for an electric vehicle, to an emission of an urgent motor vehicle stop alert (208) intended for the driver of the motor vehicle and/or to an at least partial stop (206) of at least one machine electrical (54) of the circuit when several electrical machines (54) are present in the circuit.

7. Assembly, in a motor vehicle, of an electrical circuit and its fluid cooling system coolant comprising at least one device for measuring or estimating a temperature of the fluid (410), the electric circuit comprising at least one electric machine (54) for propelling the vehicle and at least one electric element (100 to 102) associated to said at least one electric machine (54) to be cooled, the assembly comprising an electronic control unit (5) in charge of its operation and being protected by a method according to any one of the two preceding claims, **characterized in that** the electronic control unit (5) comprises means for receiving the temperature of the fluid (410) read, means for storing the first, second and third thresholds (MIN, 411), means for comparing the temperature read with the first and second thresholds (MIN), means for establishing a diagnosis of an overheated cooling system and, in this case, means for increasing (201) the flow rate of fluid in the cooling system, means for transmitting a visual or audible warning (208) to the driver and means for suspending any electrical recharging of the circuit such as regenerative braking (207) of energy.

8. Assembly according to the preceding claim, in which the electronic control unit (5) of the assembly comprises means for transmitting a request for at least partial stoppage (206) of the said at least one electric machine (54) to a main electronic control unit (6) of a hybrid motor vehicle with means for restarting the heat engine of the vehicle or means for urgently requesting at least partial shutdown (206) of said at least one electric machine (54) for an electric motor vehicle.

9. Assembly according to any one of the two preceding claims, in which the said at least one electrical element (100 to 102) is selected from the following elements taken individually or in combination: at least one inverter (100, 102), at least one device electrical charging station on board the motor vehicle, at least one converter (101) from high voltage direct current to direct current, at least one battery, the cooling system comprising at least one pump (64) and at least one radiator (58) whether or not forming part of a motorized fan unit (7) with controlled ventilation flaps (1), the electronic control unit (5) controlling means for actuating the ventilation flaps (1) in one maximum open position when the fluid flow increase means (201) are activated.

10. Electric or hybrid motor vehicle, **characterized in that** it comprises an assembly of an electric circuit and its fluid cooling system coolant according to any one of claims 7 to 9.
